# EUROPEAN PATENT APPLICATION

(11) **EP 4 738 152 A1**
(43) Date of publication of application: **06.05.2026**
(21) Application number: 24209905.9
(22) Date of filing: 30.10.2024
(51) Int. Cl.: G06F 21/10, G06F 21/57, G06F 21/74, G06F 21/79, H04L 9/40

(54) **VEHICLE SYSTEM, METHOD OF SETTING A CONTROL SYSTEM IN A SECURE MODE, COMPUTER PROGRAM, COMPUTER-READABLE MEDIUM, CONTROL ARRANGEMENT, AND VEHICLE**

(71) Applicant: Scania CV AB, 151 87 Södertälje (SE)
(72) Inventor: THEKKILAKATTIL, Abhilash, 153 38 Järna (SE)
(74) Representative: Scania CV AB

(57) **Abstract**

A vehicle system (10) is disclosed comprising a first memory section (m1) storing tamper-proof data, a second memory section (m2) storing updateable data, a control system (20) configured to perform various functions of a host vehicle (2) based on the updateable data stored in the second memory section (m2) when the control system (20) is operating in a default mode, an input unit (5) incorporated into the host vehicle (2), and a control arrangement (21). The control arrangement (21) is configured to set the control system (20) in a secure mode in response to a manual manipulation of the input unit (5), wherein the secure mode constitutes a mode in which the control system (20) is blocked from using the updateable data stored in the second memory section (m2). The present disclosure further relates to a method (100) of setting a control system (20) of a vehicle (2) in a secure mode, a computer program, a computer-readable medium (200), a control arrangement (21), and a vehicle (2).

## Description

### TECHNICAL FIELD

The present disclosure relates to a vehicle system comprising a control system configured to perform various functions of a host vehicle based on data stored in memory sections. The present disclosure further relates to a method of setting a control system of a vehicle in a secure mode, a computer program, a computer-readable medium, a control arrangement configured to set a control system of a vehicle in a secure mode, and a vehicle comprising a vehicle system.

### BACKGROUND

Modern vehicles are increasingly reliant on complex software systems and are often connected to the internet and/or other external networks. Vehicles that heavily depend on such software systems are sometimes referred to as Software Defined Vehicles (SDVs). This shift from hardware-driven to software-driven functionality allows these vehicles to evolve continuously over time. Through remote software updates, vehicle performance can be enhanced, new features can be introduced, and issues can be resolved without the need for physical modifications. This capability to update software remotely adds significant value, as it enables manufacturers to refine vehicle operations post-production and respond to market demands more efficiently, ensuring that vehicles remain technologically up to date throughout their lifecycle.

The control systems within these vehicles are typically configured to perform various functions based on updateable data stored in designated memory sections. These functions can include both basic and advanced operations that are important to the vehicle's performance, safety, and user experience. Examples of such functions include engine management, electronic braking systems that ensure precise and responsive braking control, and steering systems that assist or fully automate vehicle manoeuvring. In addition, advanced driver assistance systems (ADAS) play a vital role in enhancing road safety by providing automated features like lane-keeping assistance, adaptive cruise control, and emergency braking. These systems are essential not only for the safe and efficient operation of the vehicle but also for improving the overall driving experience.

As indicated above, the reliance on updateable data and connectivity to external networks offers numerous advantages, such as increased flexibility, faster deployment of new features, and the ability to fix issues remotely. However, these advantages also expose vehicles to potential vulnerabilities, as the same connectivity that enables remote updates can be exploited by malicious actors. If the updateable data used by these control systems is compromised or altered, whether by unauthorized access, software corruption, or other malicious activities, the vehicle may behave unpredictably. The consequences of such behaviour can lead to significant safety and performance risks.

As vehicles become more integrated with external networks and utilize a broad range of software technologies, they become susceptible to unauthorized access and cyber-attacks, which can affect not just individual vehicles but entire fleets of vehicles. In a fleet setting, this vulnerability can be particularly concerning, as attacks could simultaneously disrupt large numbers of vehicles, leading to significant operational downtime, widespread societal impact and financial loss.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a vehicle system comprising a first memory section storing tamper-proof data, a second memory section storing updateable data, and a control system configured to perform various functions of a host vehicle based on the updateable data stored in the second memory section when the control system is operating in a default mode. The vehicle system further comprises an input unit incorporated into the host vehicle, and a control arrangement. The control arrangement is configured to set the control system in a secure mode in response to a manual manipulation of the input unit, wherein the secure mode constitutes a mode in which the control system is configured to perform various functions of the host vehicle based on the tamper-proof data stored in the first memory section and is blocked from using the updateable data stored in the second memory section.

In this manner, the vehicle system can provide a safe and secure fallback for performing various functions even if the updateable data is compromised or altered, or is suspected to be compromised or altered, whether by unauthorized access, software corruption, or other malicious activities.

That is, by performing various functions of the host vehicle based on the tamper-proof data stored in the first memory section upon operating in the secure mode, and blocking the use of the updateable data stored in the second memory section, the control system can perform functions of the host vehicle based on secure, verified data, thereby reducing the risk of unpredictable behaviour, system failures, or safety-critical malfunctions. This can not only improve the safety of the host vehicle and passengers but also reduce the risk of costly operational downtime for vehicle fleets, particularly in the event of a fleet-wide cyber-attack, such as a denial-of-service attack, where a malicious actor aims to disrupt the transportation of essential goods and services. Accordingly, the vehicle system provides a robust solution that can enhance both the safety and operational stability of vehicles as well as enabling recovery of the vehicle functions in the event of a fleet wide cyber-attack.

Furthermore, due to the features of the vehicle system, it can be ensured that the control system cannot be remotely set in the secure mode through unauthorized access, software corruption, or other malicious activities. This is because the input unit is incorporated into the host vehicle, and the control arrangement is configured to set the control system in the secure mode in response to a manual manipulation of the input unit. The wording "manual manipulation" implies that the manipulation is made manually, i.e., by a human. Since the input unit is incorporated into the host vehicle, such manipulation must be performed physically at the host vehicle.

Accordingly, a vehicle system is provided overcoming, or at least alleviating, at least some of the above-mentioned problems and drawbacks. As a result, the above-mentioned object is achieved.

The feature that the first memory section stores tamper-proof data means that the first memory section stores the data in a tamper-proof manner. Likewise, the feature that the second memory section stores updateable data means that the second memory section stores the data in an updateable manner, i.e., such that the data in the second memory section can be updated, for example via an external network, such as the internet.

Optionally, the various functions performed based on the tamper-proof data includes basic vehicle functions, such as basic driving functions, which allows the host vehicle to be operated. Thereby, it can be ensured that the host vehicle can be operated in a safe and secure manner, even if the updateable data is compromised or altered, or is suspected to be compromised or altered.

Optionally, the tamper-proof data allows the control system to perform the various functions without the need for receiving data from a sender external to the host vehicle. Thereby, it can be further ensured that the host vehicle can be operated in a safe and secure manner, with improved resilience to tampering and cyber-attacks.

Optionally, the control system is configured to perform various functions of the host vehicle based on input from a first set of sensors of the host vehicle when operating in the default mode and is configured to perform various functions of the host vehicle based on input from a second set of sensors when operating in the secure mode, and wherein the second set of sensors comprises fewer sensors than the first set of sensors. Using input from a reduced number of sensors in the secure mode can enhance safety and security by simplifying the control of the functions, which minimizes the risk of errors or conflicting data. Moreover, the use of input from a reduced number of sensors in the secure mode allows for more focused monitoring with fewer entry points for unauthorized access. Accordingly, in this manner, the vehicle system becomes less vulnerable to the effects of tampering or cyber-attacks, ultimately improving the vehicle's overall safety, security and availability.

Optionally, the second set of sensors is a subset of the first set of sensors. Thereby, it can be ensured that the host vehicle can be operated in a safe and secure manner, while maintaining cost-efficiency of the vehicle comprising the vehicle system.

Optionally, the control system is configured to perform a first set of functions of the host vehicle when operating in the default mode and is configured to perform a second set of functions of the host vehicle when operating in the secure mode, wherein the second set of functions is a subset of the first set of functions. Thereby, it can be ensured that basic vehicle functions, such as those allowing the host vehicle to be operated, can be maintained also when the control system is operating in the secure mode.

Optionally, the first memory section is incorporated into the host vehicle. Thereby, the tamper-proof security of the data stored in the first memory section can be further enhanced.

Optionally, the input unit comprises at least one of a switch, a button, a keypad, or a key receptacle. Thereby, an input unit is provided having conditions for being manually manipulated in a safe, consistent, and secure manner to transfer the control system to the secure mode. An input unit comprising a switch, a button, a keypad, or a key receptacle may offer greater resistance to malicious tampering than other types of input units, such as touch sensitive screens, voice recognition input units, and the like, due to the simple design thereof which does not require extensive processing capabilities or complex signal processing. Accordingly, in this manner, it can be further ensured that the control system is not set into the secure mode by any other means than through manual manipulation of the input unit.

Optionally, the input unit comprises a touch sensitive screen. Thereby, an input unit is provided having conditions for being manually manipulated in a quick, intuitive, and user-friendly manner to transfer the control system to the secure mode.

Optionally, the vehicle system is configured such that the control system is blocked from being transitioned from the secure mode to the default mode by any other means than by manual manipulation of the input unit or physical manipulation of the vehicle system. Thereby, it can be further ensured that the host vehicle can be operated in a safe and secure manner, even if the updateable data is compromised or altered, or is suspected to be compromised or altered.

Optionally, the control arrangement is configured to transition the control system from the default mode to the secure mode in response to a first type of manual manipulation of the input unit, and is configured to transition the control system from the secure mode to the default mode in response to a second type of manual manipulation of the input unit, wherein the second type of manipulation is different from the first type of manipulation. This further ensures that the host vehicle can be operated safely and securely, as the control system is further protected from being transitioned from secure mode to default mode through malicious activity.

Optionally, the tamper-proof data stored in the first memory section is non-updateable. Thereby, it can be further safe-guarded that the control system can perform functions of the host vehicle based on secure and verified data, thereby further reducing the risk of unpredictable behaviour, system failures, or safety-critical malfunctions.

Optionally, the first memory section is a read only memory. Thereby, it can be further safe-guarded that the control system can perform functions of the host vehicle based on secure and verified data, thereby further reducing the risk of unpredictable behaviour, system failures, or safety-critical malfunctions. Moreover, it can be further ensured that the tamper-proof data stored in the first memory section cannot be changed in any manner other than through physical manipulation of the control system, such as manipulation or physical replacement of the first memory section.

According to a second aspect of the present disclosure, the object is achieved by a method of setting a control system of a vehicle in a secure mode, wherein the method is performed by a control arrangement, and wherein the vehicle comprises a vehicle system and an input unit incorporated into the vehicle. The vehicle system comprises a first memory section storing tamper-proof data and a second memory section storing updateable data. The control system is configured to perform various functions of the vehicle based on the updateable data stored in the second memory section when the control system is operating in a default mode. The method comprises the step of:
- setting the control system in a secure mode in response to a manual manipulation of the input unit, wherein the secure mode constitutes a mode in which the control system is configured to perform various functions of the vehicle based on the tamper-proof data stored in the first memory section and is blocked from using the updateable data stored in the second memory section.

In this manner, a safe and secure fallback can be provided for performing various functions even if the updateable data is compromised or altered, or is suspected to be compromised or altered, whether by unauthorized access, software corruption, or other malicious activities.

That is, by performing various functions of the host vehicle based on the tamper-proof data stored in the first memory section upon operating in the secure mode, and blocking the use of the updateable data stored in the second memory section, the control system is allowed to perform functions of the host vehicle based on secure, verified data, thereby reducing the risk of unpredictable behaviour, system failures, or safety-critical malfunctions. This can not only improve the safety of the host vehicle and passengers but also reduce the risk of costly operational downtime for vehicle fleets, particularly in the event of a fleet-wide cyber-attack, such as a denial-of-service attack, where a malicious actor aims to disrupt the transportation of essential goods and services. Accordingly, the vehicle system provides a robust solution that can enhance both the safety and operational stability of vehicles as well as enabling recovery of the vehicle functions in the event of a fleet wide cyber-attack.

Furthermore, due to the features of the method, it can be ensured that the control system cannot be remotely set in the secure mode through unauthorized access, software corruption, or other malicious activities. This is because the input unit is incorporated into the host vehicle, and the method comprises the step of setting the control system in the secure mode in response to a manual manipulation of the input unit.

Accordingly, a method is provided overcoming, or at least alleviating, at least some of the above-mentioned problems and drawbacks. As a result, the above-mentioned object is achieved.

According to a third aspect of the present disclosure, the object is achieved by a computer program comprising instructions which, when the program is executed by a control arrangement of a vehicle, cause the control arrangement to carry out the method according to the second aspect of the present disclosure. Since the computer program comprises instructions to cause the control arrangement to carry out the method according to the second aspect of the present disclosure, a computer program is provided which provides conditions for overcoming, or at least alleviating, at least some of the above-mentioned drawbacks. As a result, the above-mentioned object is achieved.

According to a fourth aspect of the present disclosure, the object is achieved by a computer-readable medium comprising instructions which, when executed by a control arrangement of a vehicle, cause the control arrangement to carry out the method according to the second aspect of the present disclosure. Since the computer-readable medium comprises instructions to cause the control arrangement to carry out the method according to the second aspect of the present disclosure, a computer-readable medium is provided which provides conditions for overcoming, or at least alleviating, at least some of the above-mentioned drawbacks. As a result, the above-mentioned object is achieved.

According to a fifth aspect of the present disclosure, the object is achieved by a control arrangement configured to set a control system of a vehicle in a secure mode, wherein the vehicle comprises a vehicle system and an input unit incorporated into the vehicle. The vehicle system comprises a first memory section storing tamper-proof data and a second memory section storing updateable data. The control system is configured to perform various functions of the vehicle based on the updateable data stored in the second memory section when the control system is operating in a default mode. The control arrangement is configured to:
- set the control system in a secure mode in response to a manual manipulation of the input unit, wherein the secure mode constitutes a mode in which the control system is configured to perform various functions of the vehicle based on the tamper-proof data stored in the first memory section and is blocked from using the updateable data stored in the second memory section.

In this manner, a safe and secure fallback can be provided for performing various functions even if the updateable data is compromised or altered, or is suspected to be compromised or altered, whether by unauthorized access, software corruption, or other malicious activities.

That is, by performing various functions of the host vehicle based on the tamper-proof data stored in the first memory section upon operating in the secure mode, and blocking the use of the updateable data stored in the second memory section, the control system is allowed to perform functions of the host vehicle based on secure, verified data, thereby reducing the risk of unpredictable behaviour, system failures, or safety-critical malfunctions. This can not only improve the safety of the host vehicle and passengers but also reduce the risk of costly operational downtime for vehicle fleets, particularly in the event of a fleet-wide cyber-attack, such as a denial-of-service attack, where a malicious actor aims to disrupt the transportation of essential goods and services. Accordingly, the vehicle system provides a robust solution that can enhance both the safety and operational stability of vehicles as well as enabling recovery of the vehicle functions in the event of a fleet wide cyber-attack.

Furthermore, due to the features of the control arrangement, it can be ensured that the control system cannot be remotely set in the secure mode through unauthorized access, software corruption, or other malicious activities. This is because the input unit is incorporated into the host vehicle, and the control arrangement is configured to set the control system in the secure mode in response to a manual manipulation of the input unit.

Accordingly, a control arrangement is provided overcoming, or at least alleviating, at least some of the above-mentioned problems and drawbacks. As a result, the above-mentioned object is achieved.

According to a sixth aspect of the present disclosure, the object is achieved by a vehicle comprising a vehicle system according to the first aspect of the present disclosure or a control arrangement according to the fifth aspect of the present disclosure. Since the vehicle comprises a vehicle system according to the first aspect of the present disclosure or a control arrangement according to the fifth aspect of the present disclosure, a vehicle is provided overcoming, or at least alleviating, at least some of the above-mentioned problems and drawbacks. As a result, the above-mentioned object is achieved.

Optionally, the vehicle is a heavy wheeled vehicle, such as a truck or a bus. Thereby, a heavy wheeled vehicle is provided having at least some of the above-mentioned advantages.

It will be appreciated that the various embodiments described for the method are all combinable with the control arrangement as described herein. That is, the control arrangement according to the fourth aspect of the invention may be configured to perform any one of the method steps of the method according to the first aspect of the invention.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a vehicle according to some embodiments,
Fig. 2 schematically illustrates a vehicle system of the vehicle illustrated in Fig. 1,
Fig. 3 schematically illustrates the vehicle system of the vehicle illustrated in Fig. 1, in which a control system of the vehicle system is operating in the secure mode,
Fig. 4 schematically illustrates a method of setting a control system of a vehicle in a secure mode, and
Fig. 5 illustrates a computer-readable medium.

### DETAILED DESCRIPTION

Aspects of the present disclosure will now be described more fully. Like reference signs refer to like elements throughout. Well-known functions or constructions will not necessarily be described in detail for brevity and/or clarity.

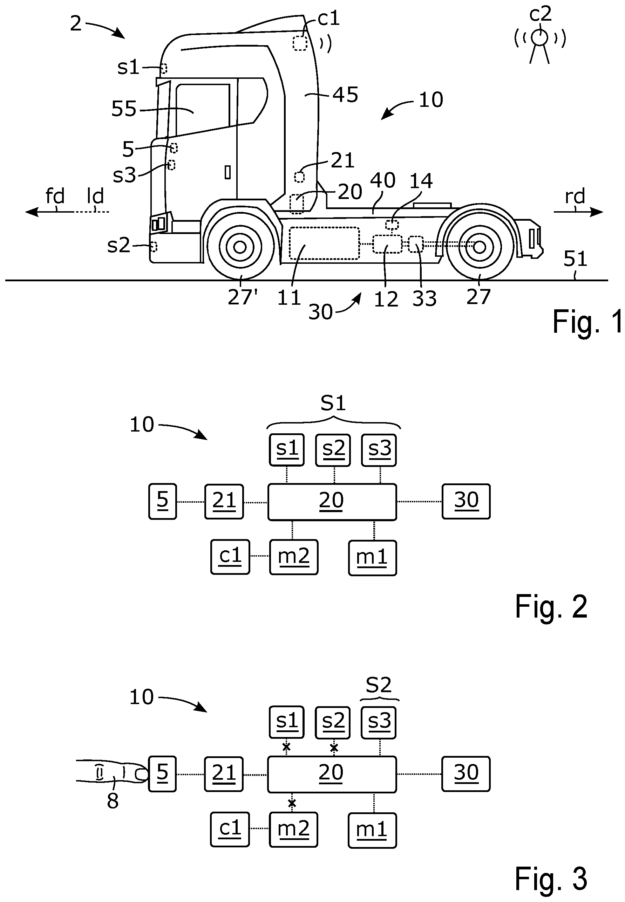

Fig. 1 schematically illustrates a vehicle 2 according to some embodiments. According to the illustrated embodiments, the vehicle 2 is a truck, i.e., a type of heavy wheeled vehicle, as well as a type of heavy commercial vehicle. According to further embodiments, the vehicle 2, as referred to herein, may be another type of heavy or lighter type of manned or unmanned vehicle for land- or water-based propulsion such as a lorry, a construction vehicle, a tractor, a bus, a car, a ship, a boat, or the like.

The vehicle 2 comprises a propulsion system 30 configured to provide motive power to the vehicle 2 via wheels 27 of the vehicle 2. According to the illustrated embodiments, the propulsion system 30 comprises an electric machine 12 for providing motive power to the vehicle 2. According to the illustrated embodiments, the electric machine 12 is configured to provide motive power to the vehicle 2 via a transmission 33 and wheels 27 of the vehicle 2. The electric machine 12 may also be referred to as an electric propulsion machine, an electric motor, an electric propulsion motor, or the like. The vehicle 2 in Fig. 1 is schematically depicted as comprising one electric machine 12. However, the propulsion system 30 of the vehicle 2 may comprise two or more electric machines 12 each configured to provide motive power to the vehicle 2.

According to the illustrated embodiments, the vehicle 2 comprises a propulsion battery 11. The propulsion battery 11 is configured to provide electricity to the electric machine 12 of the propulsion system 30 of the vehicle 2. The vehicle 2 further comprises power electronics 14 configured to regulate the transfer of electricity between the electric machine 12 and the propulsion battery 11. The propulsion battery 11 may comprise a number of rechargeable battery cells, such as lithium-ion battery cells, lithium polymer battery cells, nickel-metal hydride battery cells, sodium-ion battery cells, solid-state battery, or the like.

The vehicle 2 may comprise one or more further propulsion batteries arranged at different locations on the vehicle 2 than depicted in Fig. 1. Each propulsion battery 11 may comprise a number of battery layers each comprising a number of battery modules, wherein each battery module may comprise a number of rechargeable battery cells. According to embodiments herein, the propulsion battery 11 has a nominal voltage within the so-called Voltage Class B, usually abbreviated VCB, namely a nominal voltage equal to, or higher than, 60 volts. The wording propulsion battery 11, as referred to herein, may encompass one battery pack, one layer of battery cells, or one battery module according to the above.

According to the illustrated embodiments, the propulsion system 30 of the vehicle 2 is a pure electrical propulsion system. The wording "pure electrical propulsion system" means that the propulsion system 30 comprises one or more electric machines as the only means of providing propulsion power to the vehicle 2. However, according to further embodiments, the propulsion system 30 of the vehicle 2 may comprise an internal combustion engine configured to provide motive power to the vehicle 2 in addition to one or more electric propulsion machines 12, as indicated above, or as an alternative to the one or more electric propulsion machines 12. The propulsion system 30 may also be referred to as a hybrid electric powertrain in embodiments in which the propulsion system 30 comprises the combination of one or more electric machines and an internal combustion engine.

According to the illustrated embodiments, the vehicle 2 is a wheeled vehicle comprising a number of wheels 27, 27'. According to the embodiments illustrated in Fig. 1, the vehicle 2 comprises two driven wheels 27 which constitute rear-wheels of the vehicle 2. The vehicle 2 further comprises two non-driven wheels 27', which according to the illustrated embodiments constitute front-wheels of the vehicle 2. In other words, in these embodiments, the electric machine 12 is configured to provide motive power to the vehicle 2 via the driven wheels 27 of the vehicle 2. However, according to further embodiments, the vehicle 2 may comprise another configuration of driven and non-driven wheels.

In Fig. 1, the vehicle 2 is illustrated as positioned in an intended use position on a flat surface 51 supporting the vehicle 2. As seen in Fig. 1, the wheels 27, 27' of the vehicle 2 abut against the flat surface 51 when the vehicle 2 is positioned in the intended use position thereon. Moreover, in Fig. 1, a forward moving direction fd and a reverse moving direction rd of the vehicle 2 are indicated. The reverse moving direction rd of the vehicle 2 is opposite to the forward moving direction fd of the vehicle 2. Furthermore, in Fig. 1, a longitudinal direction Id of the vehicle 2 is indicated. The longitudinal direction Id of the vehicle 2 is parallel to a flat surface 51 supporting the vehicle 2 when the vehicle 2 is positioned in the intended upright use position thereon. Moreover, the longitudinal direction Id of the vehicle 2 is parallel to the forward moving direction fd of the vehicle 2 as well as to the reverse moving direction rd of the vehicle 2.

The number of wheels 27, 27' of the vehicle 2 is supported relative to a chassis 40 of the vehicle 2 via wheel axles. According to some embodiments, the vehicle 2 may comprise a wheel suspension system resiliently suspending the wheels 27, 27' of the vehicle 2 relative to the chassis. The chassis 40 of the vehicle 2 serves as a structural framework that supports other components and systems of the vehicle 2, such as the propulsion system 30 and a cab 45 of the vehicle 2.

That is, as is seen in Fig. 1, according to the illustrated embodiments, the vehicle 2 comprises a cab 45. According to the illustrated embodiments, the cab 45 is resiliently suspended relative to the chassis 40. The cab 45 accommodates an occupant compartment 55. The occupant compartment 55 is arranged to accommodate one or more vehicle occupants, such as a driver and possibly one or more passengers. According to the illustrated embodiments, the occupant compartment 55 also comprises a driver environment of the vehicle 2. The term "driver environment" refers to the area within the vehicle 2 where a driver operates and controls the vehicle 2. The driver environment typically includes the driver's seat, steering wheel, pedals, dashboard, and other control interfaces and displays that the driver may use to manage, initiate, and/or control functions of the vehicle 2.

The vehicle 2 further comprises a vehicle system 10. As is further explained in detail below, the vehicle system 10 comprises a control system 20 configured to perform various functions of a host vehicle 2. According to the embodiments illustrated in Fig. 1, the vehicle 2 comprises a first sensor s1, a second sensor s2, and a third sensor s3.

Fig. 2 schematically illustrates the vehicle system 10 of the vehicle 2 illustrated in Fig. 1. Below, simultaneous reference is made to Fig. 1 and Fig. 2, if not indicated otherwise.

The vehicle system 10 comprises a first memory section m1 storing tamper-proof data. In other words, the first memory section m1 stores the data in a tamper-proof manner meaning that the first memory section m1 is a tamper-proof memory section. Therefore, the data stored in the first memory section m1 is herein referred to as tamper-proof data. The tamper-proof data stored in the first memory section m1 may be non-updateable, i.e., unchangeable data. According to some embodiments, the first memory section m1 is a read only memory (ROM). In further embodiments, the first memory section m1 may be implemented using other types of non-volatile memory, such as EEPROM (Electrically Erasable Programmable Read-Only Memory) or flash memory, which can be written to once during manufacturing but remain unchangeable afterward. Additionally, the first memory section m1 may be a form of PROM (Programmable Read-Only Memory), where data is written once and permanently fixed, or even mask ROM, where data is hardcoded at the time of production and cannot be altered.

The vehicle system 10 further comprises a second memory section m2 storing updateable data. In other words, the second memory section m2 stores data in an updateable manner, meaning that the second memory section m2 is an updateable memory section. Therefore, the data stored in the second memory section m2 is herein referred to as updateable data. The updateable data stored in the second memory section m2 can thus be modified or updated, for example via an external network such as the internet. According to some embodiments, the second memory section m2 is a rewritable memory. The rewritable memory may be EEPROM (Electrically Erasable Programmable Read-Only Memory), flash memory, NAND flash, or RAM (Random Access Memory) with battery backup, allowing data to be updated and retained as needed.

The term "memory section," as used herein, may refer to a designated memory area formed by a number of memory units. The term "number of memory units" means that the designated memory area may be formed by a single memory unit or by multiple memory units. In this context, the wording "memory unit" refers to a physical memory unit configured to store data.

According to the illustrated embodiments, each of the first and second memory sections m1, m2 is incorporated into the vehicle 2 comprising the vehicle system 10, i.e., is incorporated into the host vehicle 2. According to further embodiments, at least the first memory section m1 is incorporated into the host vehicle 2. The wording "incorporated into the host vehicle 2", as used herein, means that the vehicle 2 comprising the vehicle system 10 comprises the referenced component, i.e., that the referenced component is part of the vehicle 2.

The control system 20 is transferrable between a default mode and a secure mode. As is further explained herein, the control system 20 is configured to perform various functions of the host vehicle 2 based on the updateable data stored in the second memory section m2 when the control system 20 is operating in the default mode.

In Fig. 2, the control system 20 is schematically depicted as operating in the default mode. In these embodiments, the control system 20 is configured to perform various functions of the host vehicle 2 based on the updateable data stored in the second memory section m2 and based on input from a first set S1 of sensors s1, s2, s3 of the host vehicle 2 when operating in the default mode. As can be seen in Fig. 2, the first set S1 of sensors s1, s2, s3 comprises each of the first, second, and third sensors s1, s2, s3 of the vehicle 2.

In this example, the first sensors s1 is a camera sensor, the second sensor s2 is a LiDAR (Light Detection and Ranging) sensor, and the third sensor s3 is a steering angle sensor. However, according to further embodiments, one or more of the first, second, and third sensors s1, s2, s3 may comprise another type of sensor, such as for example a Radar (Radio Detection and Ranging) sensor, an ultrasonic sensor, a tire pressure sensor, a temperature sensor, a rain sensor, an ambient light sensor, a proximity sensor, an inertial measurement unit (IMU), a gyroscope, an accelerometer, a Global Positioning System (GPS) sensor, a wheel speed sensor, or the like. Furthermore, the vehicle 2 may comprise another number of sensors s1, s2, s3 than three, from which the control system 20 is configured to utilize data for performing various functions upon operating in the default mode.

Camera sensors, which are visual sensors, capture real-time images of the environment, allowing the control system 20 to detect objects, recognize traffic signs, and assist with lane tracking. These camera sensors usually work in conjunction with advanced image processing algorithms to provide detailed visual information. The second memory section m2 may for example store updateable data representing such algorithms.

Radar (Radio Detection and Ranging) sensors emit radio waves that bounce off objects, returning signals that are analysed to determine the distance, speed, and direction of moving objects such as other vehicles. Radar is especially effective in detecting objects at long ranges and in adverse weather conditions like fog or rain. The second memory section m2 may, for example, store updateable data representing algorithms that process these radar signals, allowing the control system 20 to interpret the data more effectively in varying environments.

LiDAR (Light Detection and Ranging) uses pulsed laser light to create high-resolution, 3D maps of the vehicle's surroundings. By measuring the time it takes for the laser pulses to reflect off objects, LiDAR generates precise distance measurements, allowing the system to detect the shape and position of objects in the environment with high accuracy. The second memory section m2 may store updateable data representing software that processes these measurements, allowing the control system 20 to refine the 3D mapping capabilities based on updates.

Ultrasonic sensors are primarily used for short-range detection, typically in parking assistance systems. These sensors emit sound waves that reflect off nearby objects, providing proximity data. Ultrasonic sensors are well-suited for detecting obstacles during low-speed manoeuvres, such as parking. The second memory section m2 may, for example, store updateable data representing algorithms that convert these sound wave reflections into accurate proximity information, enabling the control system 20 to enhance obstacle detection capabilities.

A steering angle sensor measures the position and rate of rotation of a steering input unit, such as a steering wheel, providing input to the control system 20. This steering angle sensor allows the control system 20 to determine the driver's intended direction, enabling functions such as stability control, traction control, and advanced driver assistance systems (ADAS) to adjust accordingly. For example, when cornering, the steering angle sensor helps the control system 20 coordinate braking and power distribution to maintain vehicle stability. The second memory section m2 may store updateable data that represents calibration algorithms used by the steering angle sensor.

The various functions of the host vehicle 2, that the control system 20 is configured to perform, based on the updateable data stored in the second memory section m2 and based on input from a first set S1 of sensors s1, s2, s3 of the host vehicle 2 when operating in the default mode may include manoeuvring assistance, such as lane-keeping and adaptive cruise control, as well as obstacle detection and avoidance. In the default mode, the control system 20 may processes real-time data from the first, second, and third sensors s1, s2, s3 to ensure accurate lane tracking, distance regulation from surrounding vehicles, and navigation of curves based on the vehicle's steering input. Additionally, input from the first, second, and third sensors s1, s2, s3 may allow the control system 20 to adjust vehicle speed and braking in response to traffic conditions and detected obstacles.

The updateable data stored in the second memory section m2 may include not only the algorithms required for image and sensor data processing but also software updates for vehicle functions such as advanced driver-assistance systems (ADAS). This ensures that the vehicle's control system 20 can adapt to evolving conditions and technological advancements, providing improved performance over time. The control system 20 is thus capable of optimizing vehicle behaviour in a dynamic driving environment based on the updateable data stored in the second memory section m2 upon operating in the default mode.

The control system 20 may also be configured to perform additional functions in default mode, such as adjusting vehicle suspension, controlling lighting systems, or managing energy consumption of the propulsion system, depending on the specific configuration of the host vehicle 2 and the types of sensors and updateable data available in the second memory section m2. In addition to the aforementioned functions, the control system 20 may be capable of performing various other functions, for example in case the first set S1 of sensors s1, s2, s3 includes different types of sensors, such as radar, ultrasonic, or other specialized sensors. For instance, when a radar sensor is used, the control system 20 can enable adaptive cruise control with enhanced accuracy in detecting the speed and distance of vehicles ahead, even in poor visibility conditions such as heavy rain or fog. This allows the vehicle 2 to maintain a safe following distance and automatically adjust speed based on the surrounding traffic.

If ultrasonic sensors are incorporated, the control system 20 can enhance low-speed manoeuvres, such as automated parking or tight-space navigation. The precise short-range detection offered by ultrasonic sensors enables features like parking assistance, where the control system 20 can identify nearby objects and calculate safe distances to avoid collisions, guiding the vehicle into parking spots with minimal driver intervention.

Furthermore, if the first set S1 of sensors includes tire pressure monitoring sensors and/or temperature sensors, the control system 20 can optimize vehicle performance and safety by monitoring conditions across various vehicle systems, such as the propulsion battery 11, electric motor 12, power electronics 14, or other components of the propulsion system 30. For example, the control system 20 may monitor the temperature of the propulsion battery 11 or electric motor 12 to prevent overheating, or assess tire pressure to ensure proper traction. In response to any detected anomalies, the control system 20 can trigger warnings or take preventative actions, such as adjusting power output, limiting acceleration, activating cooling systems, and/or output notifications in the driver environment 55, ensuring safe and reliable operation.

Other possible functions include adaptive lighting control when sensors detect varying ambient light conditions, or automatic windshield wiper activation when rain sensors are used. In some cases, environmental sensors may detect weather changes, allowing the control system 20 to adjust vehicle settings like traction control or all-wheel drive activation to better handle slippery or challenging road conditions.

In addition to these functions, the control system 20 may also be configured to manage gear shifts in the transmission 33 of the vehicle 2. Based on input from various sensors, such as wheel speed sensors, torque sensors, and the steering angle sensor, the control system 20 can optimize gear selection to ensure smooth acceleration and deceleration, improving both energy efficiency and driving comfort. The second memory section m2 may store updateable data representing shift patterns and calibration algorithms, allowing the control system 20 to adapt the shift points of the transmission 33 to different driving conditions, such as hill climbing, heavy loads, or dynamic driving scenarios.

As indicated, these functions can be continually updated and improved based on new data stored in the second memory section m2, ensuring that the vehicle adapts to new technologies and changing environments over time.

As indicated in Fig. 1, the vehicle 2 comprises a communication device c1. The communication device c1 is configured to communicate with, i.e., receive and send data to/from a sender c2 external to the host vehicle 2. The sender c2 external to the host vehicle 2 may also be referred to as an external communication device.

As shown in Fig. 2, the control system 20 is operably connected to the communication device c1 of the vehicle 2. The control system 20 may be configured to update the data stored in the second memory section m2 using data received from the external sender c2 through the communication device c1. This enables the control system 20 to ensure that the vehicle operates with the most up-to-date information and software.

The communication between the vehicle's communication device c1 and the external sender c2 may be carried out through wireless communication technologies. For example, cellular communication may be utilised, such as 4G LTE or 5G networks, due to their high data transfer rates, reliability, and widespread availability. These cellular networks can support secure, real-time communication with external servers or devices, facilitating over-the-air (OTA) updates of the data stored in the second memory section m2.

Additionally, Wi-Fi communication may be used when the vehicle 2 is in a static location, such as at home or in a service centre, to receive updates or interact with a local network. Vehicle-to-Vehicle (V2V) and Vehicle-to-Everything (V2X) communication technologies could also be utilised.

According to embodiments herein, the vehicle 2 comprises an input unit 5 incorporated into the host vehicle 2 and a control arrangement 21. The input unit 5 may comprise at least one of a switch, a button, a touch sensitive screen, a keypad, or a key receptacle. According to the embodiments illustrated in Fig. 1, the input unit 5 is arranged inside the driver environment 55 of the vehicle 2. However, according to further embodiments, the input unit 5 may be incorporated into the vehicle 2 at another location of the vehicle 2, such as outside the cab 45 of the vehicle 2.

The control arrangement 21 is configured to set the control system 20 in a secure mode in response to a manual manipulation of the input unit 5. The wording "manual manipulation", as used herein, implies that the manipulation is made manually, i.e., by a human. Since the input unit 5 is incorporated into the vehicle 5, such manipulation must be performed physically at the vehicle 5 comprising the vehicle system 10.

The manual manipulation of the input unit 5 may vary depending on the type of input unit 5 used. In the case of a switch, the manual manipulation may include physically moving the switch between its different positions, such as flipping it up or down. If the input unit 5 is a button, the manual manipulation may include pressing the button and releasing it. In such embodiments, the input unit 5 may be configured to provide a tactile click or response indicating that the action has been registered.

When the input unit 5 is a touch-sensitive screen, the manual manipulation may include tapping specific areas of the screen to select options, entering a code by tapping a specific sequence or key combination of numbers, letters, and/or symbols, or swiping to navigate through menus to tap on a designated virtual button or object on the screen.

For a keypad, manual manipulation may include pressing individual physical keys in a specific sequence or key combination, such as by entering numbers, letters, and/or symbols in a specific sequence via the keypad.

In the case of a key receptacle, the manual manipulation may include inserting a physical key into the receptacle. The user may then turn the key or press the key to engage or disengage a locking mechanism.

In all cases, the manual manipulation is to be performed manually by the user interacting with the input unit 5 physically, which input unit 5 is integrated into the vehicle 5 comprising the vehicle system 10. The manual manipulation, as referred to herein, may also be referred to as a manual interaction, a manual actuation, a manual activation, a physical interaction, a physical actuation, a physical activation, or similar.

According to embodiments herein, the secure mode constitutes a mode in which the control system 20 is configured to perform various functions of the host vehicle 2 based on the tamper-proof data stored in the first memory section m1 and is blocked from using the updateable data stored in the second memory section m2.

Fig. 3 schematically illustrates the vehicle system 10 of the vehicle 2 illustrated in Fig. 1, in which the control system 20 of the vehicle system 10 is operating in the secure mode.

That is, in Fig. 3, a finger 8 of a user is depicted as manipulating the input unit 5. As a result, the control arrangement 21 sets the control system 20 in the secure mode in response to the manual manipulation of the input unit 5. The control arrangement 21 may be configured to set the control system 20 in the secure mode by sending a control signal to the control system 20. In Fig. 2 and Fig. 3, the control arrangement 21 is illustrated as constituting a unit being separate from the control system 20. However, according to further embodiments, the control arrangement 21, as referred to herein, may be an integral part of the control system 20.

As can be seen in Fig. 3, the control system 20 is blocked from using the updateable data stored in the second memory section m2 when the control system 20 is operating in the secure mode. In Fig. 3, this is illustrated by a cross placed over the connection between the control system 20 and the second memory section m2.

When the control system 20 operates in secure mode, it can be blocked from using the updateable data stored in the second memory section m2 in several ways. One approach is to disable access to the second memory section m2, either through a software lock or by physically isolating the second memory section m2 from the control system 20, thereby preventing any interaction with the updateable data stored in the second memory section m2. Another approach involves restricting specific data transfers by filtering out commands that attempt to read data from the second memory section m2. Alternatively, the control system 20 may be configured to override the updateable data by using default or hardcoded information stored in a more secure memory section, such as in the first memory section m1, ensuring that potentially compromised data is not used when operating in the secure mode.

As mentioned, the control system 20 is configured to perform various functions of the host vehicle 2 based on the tamper-proof data stored in the first memory section m1 when the control system 20 is operating in the secure mode. The various functions performed based on the tamper-proof data may include basic vehicle functions, such as basic driving functions, which allows the host vehicle 2 to be safely operated, i.e., driven. The basic driving functions, which allows the host vehicle 2 to be operated, as referred to herein, may include functions allowing the vehicle 2 to be propelled, i.e., driven, in in the forward and reverse movement direction fd, rd thereof.

For example, these functions may include controlling the propulsion system 30 of the vehicle 2 to ensure proper acceleration and braking, managing the steering system to maintain directional control, and regulating the transmission 33 to allow for gear shifting. Additionally, the tamper-proof data stored in the first memory section m1 may be used to support safety features such as activating airbags in the event of a collision, ensuring the proper functioning of the anti-lock braking system (ABS), or managing an electronic stability control (ESC) system to prevent skidding or loss of control.

Due to the tamper-proof data stored in the first memory section m1, these basic vehicle functions can be maintained to guarantee that the vehicle 2 can still be safely operated in the secure mode, even if access to updateable data stored in the second memory section m2 is blocked. Functions such as maintaining minimum vehicle operation (e.g., emergency driving modes), controlling lighting systems, and ensuring proper communication with external safety systems (such as emergency response networks) may also rely on the tamper-proof data stored in the first memory section m1 to ensure that the vehicle 2 remains operable and secure.

According to some embodiments, the control system 20 is configured to perform a first set of functions of the host vehicle 2 when operating in the default mode and is configured to perform a second set of functions of the host vehicle 2 when operating in the secure mode, wherein the second set of functions is a subset of the first set of functions. This may also be expressed as that the control system 20 is capable of performing different layers of functions, wherein the control system 20 is capable of performing a layer of basic functions based on the tamper-proof data stored in the first memory section m1, and is capable of performing layers of more advanced functions based on the updateable data stored in the second memory section m2.

However, according to some embodiments, the tamper-proof data stored in the first memory section m1 may be such that the control system 20 is able to perform also some more advanced functions based on the data, such as, for example, electronic stability control (ESC), anti-lock braking system (ABS) operation, or emergency braking assistance. Additionally, certain self-driving capabilities may still be available in secure mode, such as lane-keeping assistance or adaptive cruise control, which rely on tamper-proof data stored in the first memory section m1 to ensure basic autonomous functionality.

Moreover, according to some embodiments, the control system 20 may be configured to also utilize the tamper-proof data stored in the first memory section m1 upon operating in the default mode, for example when performing some basic vehicle functions. Furthermore, the tamper-proof data stored in the first memory section m1 may form the basis also for some more advanced control, wherein the updatable data stored in the second memory section m2 can be used to refine this control upon operating in the default mode.

Furthermore, according to the illustrated embodiments, the tamper-proof data allows the control system 20 to perform the various functions without the need for receiving data from the sender c2 external to the host vehicle 2. In addition, according to the illustrated embodiments, the control system 20 is blocked from using data received from the sender c2 external to the host vehicle 2 upon operating in the secure mode. In this manner, the operational safety and security can be further enhanced upon operating in the secure mode.

Moreover, as depicted in Fig. 3, according to the illustrated embodiments, the control system 20 is configured to perform various functions of the host vehicle 2 based on input from a second set S2 of sensors s3 when operating in the secure mode, wherein the second set S2 of sensors s3 comprises fewer sensors s3 than the first set S1 of sensors s1, s2, s3. As can be seen by the crosses in Fig. 3, according to the illustrated embodiments, the control system 20 is blocked from accessing data from the remaining sensors s1, s2 upon operating in the secure mode.

In more detail, according to the example embodiments illustrated in Fig. 3, the control system 20 is configured to perform various functions of the host vehicle 2 based on input from the third sensor s3, i.e., the steering angle sensor according to the illustrated embodiments, and is blocked from using data from the first and second sensors s1, s2, i.e., the camera sensor and the LiDAR (Light Detection and Ranging) sensor according to the illustrated example embodiments, upon operating in the secure mode. In this manner, the security upon operating in the secure mode can be further enhanced because data governing the first and second sensors s1, s2 could potentially be compromised through unauthorized access, software corruption, or other malicious activities.

According to some embodiments, the second set S2 of sensors s3 may consist of sensors configured to provide basic data, such as temperature, position, pressure, speed, and light intensity, without requiring extensive processing capabilities. These sensors may be referred to as simpler types of sensors and may be designed to deliver straightforward basic data outputs, being useable without complex signal processing or computational resources.

The first set S1 of sensors s1, s2, s3 may comprise sensors including the simpler types of sensors found in the second set S2, as well as additional sensors with more complex processing requirements. These more complex sensors may include, but are not limited to, camera sensors, LiDAR (Light Detection and Ranging) sensors, and Radar (Radio Detection and Ranging) sensors, which are configured to process more extensive data for object detection, distance measurement, or environmental mapping. The first set S1 may thus be operable to deliver both straightforward basic data outputs and data requiring higher levels of processing.

This aspect may also be expressed as that at least one of the average data transmission rate, average computational capacity, or average communication interface with external networks or systems of the sensors s3 within the second set S2 of sensors s3 is less than that of the sensors s1, s2, s3 within the first set S1 of sensors s1, s2, s3. In this manner, the second set S2 of sensors s3 can be made less susceptible to unauthorized access, software corruption, or other malicious activities than the first set S1 of sensors s1, s2, s3, and the security upon operating in the secure mode can be further enhanced.

As understood from the above, according to the illustrated embodiments, the second set S2 of sensors s3 is a proper subset of the first set S1 of sensors s1, s2, s3. However, the second set S2 of sensors s3 may not be a proper subset of the first set S1 of sensors s1, s2, s3. For example, the second set S2 of sensors may comprise all sensors s1, s2, s3 of the first set S1 of sensors s1, s2, s3, or may comprise one or more sensors not comprised in the first set S1 of sensors s1, s2, s3.

According to embodiments herein, the control system 20 is configured to remain in the secure mode after the control arrangement 21 has set the control system 20 in the secure mode following the the manual manipulation of the input unit 5. Moreover, according to the illustrated embodiments, the vehicle system 10 is configured such that the control system 20 is blocked from being transitioned from the secure mode to the default mode by any other means than by manual manipulation of the input unit 5 or physical manipulation of the vehicle system 10. Such a physical manipulation of the vehicle system 10 may for example involve a physical replacement of the first memory section m1.

Furthermore, according to some embodiments, the control arrangement 21 is configured to transition the control system 20 from the default mode to the secure mode in response to a first type of manual manipulation of the input unit 5, and is configured to transition the control system 20 from the secure mode to the default mode in response to a second type of manual manipulation of the input unit 5, wherein the second type of manipulation is different from the first type of manipulation.

The first and second types of manual manipulation may vary depending on the type of input unit 5 used. In the case of a switch, the first type of manual manipulation may for example include flipping the switch up to transition the control system 20 from the default mode to the secure mode. The second type of manual manipulation, in this case, may include flipping the switch down to transition the control system 20 from the secure mode back to the default mode.

If the input unit 5 is a button, the first type of manipulation may include a quick press and release of the button to initiate the transition from the default mode to the secure mode. The second type of manipulation, to return the control system 20 to the default mode, may include pressing and holding the button for a longer duration, ensuring a more deliberate action is required to exit the secure mode and revert to the default mode.

When the input unit 5 is a touch-sensitive screen, the first type of manual manipulation may involve tapping a specific on-screen button or area for a longer duration or entering a code by tapping a sequence or key combination of numbers, letters, and/or symbols to transition into secure mode. The second type of manipulation might involve tapping another on-screen button or entering a different sequence or key combination, or performing a swipe gesture to revert to the default mode.

For a keypad, the first type of manipulation may include entering a specific sequence or key combination of numbers, letters, and/or symbols to trigger the secure mode. The second type of manipulation may involve entering a different sequence or key combination to switch back to the default mode.

In the case of a key receptacle, the first type of manipulation may include inserting and turning the key to a specific position to engage the secure mode. For the second type of manipulation, transitioning the control system 20 back to the default mode may require either turning the key in the opposite direction or using a different key, which must be inserted and turned to disengage the secure mode and return to the default mode.

In all cases, the first and second types of manual manipulation involve distinct physical actions performed by the user on the input unit 5, which is integrated into the vehicle 5 comprising the vehicle system 10. These actions ensure that the control system 20 can respond to clear, deliberate inputs for transitioning from the default mode to the secure mode, enhancing both security and user control.

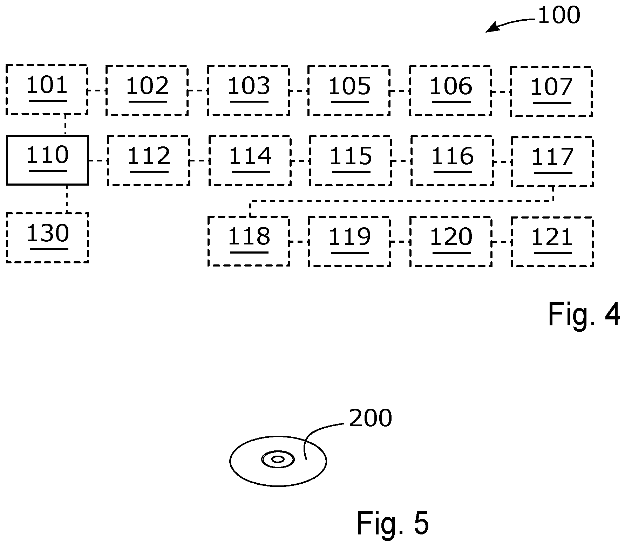

**Fig. 4** schematically illustrates a method 100 of setting a control system of a vehicle in a secure mode. The vehicle may be a vehicle 2 according to the embodiments illustrated in Fig. 1, i.e., a vehicle 2 comprising a vehicle system 10 explained with reference to Fig. 2 and Fig. 3. Therefore, below, simultaneous reference is made to Fig. 1 - Fig. 4, if not indicated otherwise.

The method 100 is a method of setting a control system 20 of a vehicle 2 in a secure mode, wherein the method 100 is performed by a control arrangement 21, and wherein the vehicle 2 comprises a vehicle system 10 and an input unit 5 incorporated into the vehicle 2. The vehicle system 10 comprises a first memory section m1 storing tamper-proof data and a second memory section m2 storing updateable data. The control system 20 is configured to perform various functions of the vehicle 2 based on the updateable data stored in the second memory section m2 when the control system 20 is operating in a default mode. The method 100 comprises the step of:
- setting 110 the control system 20 in a secure mode in response to a manual manipulation of the input unit 5, wherein the secure mode constitutes a mode in which the control system 20 is configured to perform various functions of the vehicle 2 based on the tamper-proof data stored in the first memory section m1 and is blocked from using the updateable data stored in the second memory section m2.

According to some embodiments, the method 100 comprises the steps of:
- detecting 105 manual manipulation of the input unit 5, and
- performing 112 the step of setting 110 the control system 20 in the secure mode in response to the detection of the manual manipulation of the input unit 5.

Moreover, according to some embodiments, the method 100 comprises the steps of:
- detecting 106 a first type of manual manipulation of the input unit 5, and
- performing 114 the step of setting 110 the control system 20 in the secure mode in response to the detection of the first type of manual manipulation of the input unit 5.

Furthermore, according to some embodiments, the method 100 comprises the steps of:
- detecting 107 a second type of manual manipulation of the input unit 5, and
- setting 130 the control system 20 in the default mode in response to the detection of the second type of manual manipulation of the input unit 5.

According to some embodiments, the method 100 comprises the step of:
- performing 101 various functions of the vehicle 2 based on the updateable data stored in the second memory section m2 when operating in the default mode.

Moreover, according to some embodiments, the method 100 comprises the step of:
- performing 102 various functions of the host vehicle 2 based on input from a first set S1 of sensors s1, s2, s3 of the host vehicle 2 and based on the updateable data stored in the second memory section m2 when operating in the default mode.

Furthermore, according to some embodiments, the method 100 may comprises the steps of:
- performing 115 various functions of the vehicle 2 based on the tamper-proof data stored in the first memory section m1, and
- blocking 116 use of the updateable data stored in the second memory section m2 when operating in the secure mode.

According to some embodiments, the method 100 comprises the step of:
- performing 117 various functions of the host vehicle 2 based on input from a second set S2 of sensors s3 and based on the tamper-proof data stored in the first memory section m1 when operating in the secure mode.

The second set S2 of sensors s3 may comprise fewer sensors s3 than the first set S1 of sensors s1, s2, s3. Moreover, the second set S2 of sensors s3 may be a subset of the first set S1 of sensors s1, s2, s3.

According to some embodiments, the method 100 comprises the steps of:
- performing 103 a first set of functions of the host vehicle 2 when operating in the default mode, and
- performing 118 a second set of functions of the host vehicle 2 when operating in the secure mode, wherein the second set of functions is a subset of the first set of functions.

Furthermore, according to some embodiments, the method 100 may comprises the step of:
- blocking 119 the control system 20 from being transitioned from the secure mode to the default mode by any other means than by manual manipulation of the input unit 5 or physical manipulation of the vehicle system 10.

Moreover, according to some embodiments, the method 100 may comprises the step of:
- blocking 120 the control system 20 from using data received from a sender c2 external to the host vehicle 2 for performing various functions when the control system 20 is operating in the secure mode.

Furthermore, according to some embodiments, the method 100 may comprises the step of:
- blocking 121 the control system 20 from receiving data from a sender c2 external to the host vehicle 2 when operating in the secure mode.

As mentioned, according to some embodiments, the control arrangement 21 is comprised in the control system 20. It will be appreciated that the various embodiments described for the method 100 are all combinable with the control arrangement 21 and/or the control system 20 as described herein. That is, the control arrangement 21, and/or the control system 20, may be configured to perform any one of the method steps 101, 102, 103, 105, 106, 107, 110, 112, 114, 115, 116, 117, 118, 119, 120, 121, and 130.

**Fig. 5** illustrates a computer-readable medium 200 comprising instructions which, when executed by a computer, cause the computer to carry out the method 100 according to some embodiments of the present disclosure. According to some embodiments, the computer-readable medium 200 comprises a computer program comprising instructions which, when the program is executed by a computer, cause the computer to carry out the method 100 according to some embodiments. The computer may be comprised in the control arrangement 21 and/or in the control system 20.

One skilled in the art will appreciate that the method 100 of setting a control system 20 of a vehicle 2 in a secure mode may be implemented by programmed instructions. These programmed instructions are typically constituted by a computer program, which, when it is executed in the control arrangement 21, and/or the control system 20, ensures that the control arrangement 21, and/or control system 20, carries out the desired control, such as the method steps 101, 102, 103, 105, 106, 107, 110, 112, 114, 115, 116, 117, 118, 119, 120, 121, and 130 described herein. The computer program is usually part of a computer program product which comprises a suitable digital storage medium on which the computer program is stored, such as the computer-readable medium 200 illustrated in Fig. 5. In other words, the computer program product may be a computer readable medium 200 and the computer program may be stored in the computer readable medium 200.

The control arrangement 21, and/or the control system 20, may comprise a computer which may take the form of substantially any suitable type of hardware or hardware/firmware device implemented using processing circuity such as, but not limited to, a processor, Central Processing Unit (CPU), a controller, an arithmetic logic unit (ALU), a digital signal processor, an Application Specific Integrated Circuit (ASIC), a circuit for digital signal processing (digital signal processor, DSP), a microcomputer, a field programmable gate array (FPGA), a System-on-Chip (SoC), a programmable logic unit, a microprocessor, an application-specific integrated circuit, or any other device capable of electronically performing operations in a defined manner, or other processing logic that may interpret and execute instructions. The herein utilised expression "computer" may represent a processing circuitry comprising a plurality of processing circuits, such as, e.g., any, some or all of the ones mentioned above.

The control arrangement 21, and/or the control system 20, may further comprise a memory unit, wherein the computer may be connected to the memory unit, which may provide the computer with, for example, stored program code and/or stored data which the computer may need to enable it to do calculations. The computer may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 21, and/or the control system 20, is connected to components of the vehicle 2 for receiving and/or sending input and output signals. These input and output signals may comprise waveforms, pulses, or other attributes which the input signal receiving devices can detect as information and which can be converted to signals processable by the control arrangement 21, and/or the control system 20. These signals may then be supplied to the computer. One or more output signal sending devices may be arranged to convert calculation results from the computer to output signals for conveying to other parts of the vehicle's control system and/or the component or components for which the signals are intended. Each of the connections to the respective components of the vehicle 2 for receiving and sending input and output signals may take the form of one or more from among a cable, a data bus, e.g. a CAN (controller area network) bus, a MOST (media orientated systems transport) bus or some other bus configuration, or a wireless connection.

In the embodiments illustrated, the vehicle 2 comprises a control arrangement 21 and a control system 20 but might alternatively be implemented wholly or partly in two or more control arrangements, two or more control systems, or two or more control units.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles and engines of the type here concerned are therefore often provided with significantly more control arrangements than depicted in Fig. 1 - Fig. 3, as one skilled in the art will surely appreciate.

The computer-readable medium 200 may be provided for instance in the form of a data carrier carrying computer program code for performing at least some of the method steps 101, 102, 103, 105, 106, 107, 110, 112, 114, 115, 116, 117, 118, 119, 120, 121, and 130 according to some embodiments of the method 100 when being loaded into one or more computers of the control arrangement 21, and/or the control system 20. The data carrier may be, e.g. a CD ROM disc, as is illustrated in Fig. 5, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. Accordingly, in some embodiments, the computer-readable medium 200 may be a non-transitory computer-readable medium, such as a tangible electronic, magnetic, optical, infrared, electromagnetic, and/or semiconductor system, apparatus, and/or device. The computer-readable medium 200 may furthermore be provided as computer program code on a server and may be downloaded to the control arrangement 21, and/or the control system 20, remotely, e.g., over an Internet or an intranet connection, or via other wired or wireless communication systems.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A vehicle system (10) comprising:
- a first memory section (m1) storing tamper-proof data,
- a second memory section (m2) storing updateable data,
- a control system (20) configured to perform various functions of a host vehicle (2) based on the updateable data stored in the second memory section (m2) when the control system (20) is operating in a default mode,
- an input unit (5) incorporated into the host vehicle (2), and
- a control arrangement (21),
wherein the control arrangement (21) is configured to set the control system (20) in a secure mode in response to a manual manipulation of the input unit (5), wherein the secure mode constitutes a mode in which the control system (20) is configured to perform various functions of the host vehicle (2) based on the tamper-proof data stored in the first memory section (m1) and is blocked from using the updateable data stored in the second memory section (m2).

2. The vehicle system (10) according to claim 1, wherein the various functions performed based on the tamper-proof data includes basic vehicle functions, such as basic driving functions, which allows the host vehicle (2) to be operated.

3. The vehicle system (10) according to claim 1 or 2, wherein the tamper-proof data allows the control system (20) to perform the various functions without the need for receiving data from a sender (c2) external to the host vehicle (2).

4. The vehicle system (10) according to any one of the preceding claims, wherein the control system (20) is configured to perform various functions of the host vehicle (2) based on input from a first set (S1) of sensors (s1, s2, s3) of the host vehicle (2) when operating in the default mode and is configured to perform various functions of the host vehicle (2) based on input from a second set (S2) of sensors (s3) when operating in the secure mode, and wherein the second set (S2) of sensors (s3) comprises fewer sensors (s3) than the first set (S1) of sensors (s1, s2, s3).

5. The vehicle system (10) according to claim 4, wherein the second set (S2) of sensors (s3) is a subset of the first set (S1) of sensors (s1, s2, s3).

6. The vehicle system (10) according to any one of the preceding claims, wherein the control system (20) is configured to perform a first set of functions of the host vehicle (2) when operating in the default mode and is configured to perform a second set of functions of the host vehicle (2) when operating in the secure mode, wherein the second set of functions is a subset of the first set of functions.

7. The vehicle system (10) according to any one of the preceding claims, wherein the first memory section (m1) is incorporated into the host vehicle (2).

8. The vehicle system (10) according to any one of the preceding claims, wherein the input unit (5) comprises at least one of a switch, a button, a touch sensitive screen, a keypad, or a key receptacle.

9. The vehicle system (10) according to any one of the preceding claims, wherein the vehicle system (10) is configured such that the control system (20) is blocked from being transitioned from the secure mode to the default mode by any other means than by manual manipulation of the input unit (5) or physical manipulation of the vehicle system (10).

10. The vehicle system (10) according to any one of the preceding claims, wherein the control arrangement (21) is configured to transition the control system (20) from the default mode to the secure mode in response to a first type of manual manipulation of the input unit (5), and is configured to transition the control system (20) from the secure mode to the default mode in response to a second type of manual manipulation of the input unit (5), wherein the second type of manipulation is different from the first type of manipulation.

11. The vehicle system (10) according to any one of the preceding claims, wherein the tamper-proof data stored in the first memory section (m1) is non-updateable.

12. The vehicle system (10) according to any one of the preceding claims, wherein the first memory section (m1) is a read only memory.

13. A method (100) of setting a control system (20) of a vehicle (2) in a secure mode, wherein the method (100) is performed by a control arrangement (21), and wherein the vehicle (2) comprises a vehicle system (10) and an input unit (5) incorporated into the vehicle (2), wherein the vehicle system (10) comprises a first memory section (m1) storing tamper-proof data and a second memory section (m2) storing updateable data, and
wherein the control system (20) is configured to perform various functions of the vehicle (2) based on the updateable data stored in the second memory section (m2) when the control system (20) is operating in a default mode, and wherein the method (100) comprises the step of:
- setting (110) the control system (20) in a secure mode in response to a manual manipulation of the input unit (5), wherein the secure mode constitutes a mode in which the control system (20) is configured to perform various functions of the vehicle (2) based on the tamper-proof data stored in the first memory section (m1) and is blocked from using the updateable data stored in the second memory section (m2).

14. A computer program comprising instructions which, when the program is executed by a control arrangement (21) of a vehicle (2), cause the control arrangement (21) to carry out the method (100) according claim 13.

15. A computer-readable medium (200) comprising instructions which, when executed by a control arrangement (21) of a vehicle (2), cause the control arrangement (21) to carry out the method (100) according claim 13.

16. A control arrangement (21) configured to set a control system (20) of a vehicle (2) in a secure mode, wherein the vehicle (2) comprises a vehicle system (10) and an input unit (5) incorporated into the vehicle (2), wherein the vehicle system (10) comprises a first memory section (m1) storing tamper-proof data and a second memory section (m2) storing updateable data, and
wherein the control system (20) is configured to perform various functions of the vehicle (2) based on the updateable data stored in the second memory section (m2) when the control system (20) is operating in a default mode, and wherein the control arrangement (21) is configured to:
- set the control system (20) in a secure mode in response to a manual manipulation of the input unit (5), wherein the secure mode constitutes a mode in which the control system (20) is configured to perform various functions of the vehicle (2) based on the tamper-proof data stored in the first memory section (m1) and is blocked from using the updateable data stored in the second memory section (m2).

17. A vehicle (2) comprising a vehicle system (10) according to any one of the claims 1-12 or a control arrangement (21) according to claim 16.

18. The vehicle (2) according to claim 17, wherein the vehicle (2) is a heavy wheeled vehicle (2), such as a truck or a bus.
